# EUROPÄISCHE PATENTSCHRIFT

(11) **EP 1 153 798 B1**
(45) Veröffentlichungstag und Bekanntmachung des Hinweises auf die Patenterteilung: **13.04.2005**
(21) Anmeldenummer: 01111394.1
(22) Anmeldetag: 10.05.2001
(51) Int. Cl.: B60R 9/058

(54) **Dachlastträger-Befestigung**
Roof rack fastening
Moyen de fixation d'une galerie de toit

(30) Priorität: 13.05.2000 DE 10023526
(43) Veröffentlichungstag der Anmeldung: 14.11.2001
(73) Patentinhaber: ADAM OPEL AG, 65423 Rüsselsheim (DE)
(72) Erfinder: Hürter, Helmut, Dipl.-Ing., 64572 Büttelborn (DE)

(56) Entgegenhaltungen:
- EP-A- 0 645 283
- WO-A-96/17751
- WO-A-97/19832
- DE-A- 3 151 404
- DE-A- 19 518 949
- US-A- 5 845 829
- US-A- 5 964 387

## Beschreibung

Die Erfindung betrifft eine Dachlastträger-Befestigung für ein Kraftfahrzeug, welches an jeder Längsseite seines Daches eine Dachreling hat, auf der der Dachlastträger mit Stützfüßen aufsitzt und befestigt ist.

US 5 845 829 A betrifft eine Dachlastträger-Befestigung nach dem Oberbegriff des Anspruchs 1.

Eine andere Dachlastträger-Befestigung der vorstehenden Art ist beispielsweise in der DE 90 02 387.0 U1 beschrieben. Bei ihr ist die Dachreling als T-Profil ausgebildet, welches über seine gesamte Länge auf dem Dach des Kraftfahrzeuges aufsitzt und deshalb nicht zu untergreifen ist und in welches der Dachlastträger eingesetzt und ohne Werkzeug mittels eines an ihm vorgesehenen Schnellspannhebels fixiert werden kann. Dabei wird lediglich eine Seite des T-Profils von den Haltemitteln untergriffen, so dass für den Fall eines Frontalaufpralls die Gefahr besteht, dass sich der Dachlastträger vom Dach löst. Deshalb werden bei anderen, in der Praxis verwirklichten Dachlastträger-Befestigungen Nutensteine in solche T-Profile eingeschoben, in welche man an den Füßen des Dachlastträgers vorgesehene Schrauben einschraubt, um den Dachlastträger zuverlässig mit dem T-Profil zu verbinden. Das hat jedoch den Nachteil, dass zum Fixieren und Lösen des Dachlastträgers Werkzeug erforderlich ist, so dass man häufig aus Bequemlichkeit nach dem Gebrauch des Dachlastträgers auf seine Demontage verzichtet und dadurch einen Mehrverbrauch an Kraftstoff und erhöhte Windgeräusche in Kauf nehmen muss. Weiterhin besteht die Gefahr einer nicht sachgerechten Montage, wodurch der Dachlastträger bei einem Frontalaufprall von dem Kraftfahrzeug freikommen kann.

In der Praxis ist auch schon ein Kraftfahrzeug mit einer über ihre gesamte Länge auf dem Fahrzeugdach aufsitzenden Reling bekannt geworden, bei dem der Dachlastträger an horizontalen Durchbrechungen der Reling mittels Schrauben befestigt wird. Auch diese Ausführung hat den Nachteil, dass zur Montage und Demontage des Dachlastträgers Werkzeug erforderlich ist und eine Fehlmontage nicht ausgeschlossen werden kann.

Der Erfindung liegt das Problem zugrunde, eine Dachlastträger-Befestigung der eingangs genannten Art so zu gestalten, dass auch bei einer möglichen Befestigung ohne Werkzeug keine Gefahr besteht, dass der Dachlastträger im Falle eines Frontalaufpralls des Kraftfahrzeugs sich vom Fahrzeugdach zu lösen vermag und die kein Untergreifen der Reling erfordert.

Dieses Problem wird erfindungsgemäß dadurch gelöst, dass die Dachreling zum Eingreifen von jeweils einer Spannklammer eines Stützfußes an zumindest einer Längsseite eine ihren Querschnitt verengende Einschnürung hat und dass die Einschnürung zur Begrenzung der horizontalen Verschiebbarkeit der Spannklammern vertikal verlaufende Rippen aufweist.

Bei einer solchen Dachlastträger-Befestigung kann man sich des an sich gebräuchlichen Spannhebelprinzips bedienen, so dass zur Montage und Demontage des Dachlastträgers kein Werkzeug notwendig ist. Durch die erfindungsgemäße Einschnürung und die vertikal verlaufenden Rippen wird sichergestellt, dass die Spannklammern formschlüssig und nicht nur reibschlüssig in die Dachreling eingreifen, so dass ein Freikommen im Falle eines Unfalls nicht mehr zu befürchten ist.

Besonders vorteilhaft ist es, wenn die Dachreling jeweils in einem Schweißkanal des Daches befestigt ist und nach oben hin aus dem Schweißkanal herausragt. Durch eine solche Anordnung sieht man von außen nicht die Befestigungsmittel, mit denen die Dachreling mit dem Dach verbunden ist, so dass es sich hierbei um einfache Schrauben handeln kann, welche nicht stilistischen Anforderungen entsprechen müssen.

Üblicherweise werden Schweißkanäle aus optischen Gründen jeweils durch eine Abdeckblende abgedeckt. Die Dachreling kann zugleich die Funktion einer Abdeckblende haben, wenn gemäß einer anderen Weiterbildung der Erfindung die Dachreling den Querschnitt des Schweißkanals zumindest weitgehend ausfüllt.

Der Dachlastträger wird jeweils von beiden Seiten jeder Dachreling durch einen Formschluss gehalten, wenn an jeder Längsseite eine Einschnürung vorgesehen ist und die Stützfüße jeweils einen in diese Einschnürung greifenden Spannvorsprung aufweisen.

Die Dachlastträger-Befestigung wirkt optisch besonders vorteilhaft, weil bei nicht montiertem Dachlastträger an der Außenseite der Dachreling keine Durchbrechungen oder senkrechte Rippen das Gesamterscheinungsbild stören, wenn gemäß einer anderen Weiterbildung der Erfindung die Spannklammer jedes Stützfußes jeweils fahrzeuginnenseitig zur jeweiligen Dachreling vorgesehen sind. Hierzu im Gegensatz hat man bisher bei vergleichbaren Dachlastträger-Befestigungen die Spannklammern außenseitig vorgesehen.

Eine konstruktiv einfache Ausführungsform der Erfindung besteht darin, dass zum Eingreifen durch die Spannklammer an einer Seite der jeweiligen Dachreling für jede Spannklammer zumindest eine Einschnürung vorgesehen ist, welche in etwa die Breite der Spannklammer hat, und dass die vertikal verlaufenden Rippen durch den Wandbereich zwischen zwei Einschnürungen gebildet sind.

Alternativ ist es jedoch auch möglich, dass die Dachlastreling mehrere Durchbrechungen zum Eingreifen jeweils einer Spannklammer des Dachlastträgers aufweist und die vertikal verlaufenden Rippen durch den Wandbereich zwischen zwei Durchbrechungen gebildet sind.

Der Dachlastträger wird besonders zuverlässig auf der Reling gehalten, wenn die Spannklammer an ihrem freien Ende einen in die Durchbrechung eingreifenden, in Spannstellung nach oben ragenden Steg hat.

Die Spannklammer vermag in Spannstellung gegen eine besonders große Fläche der Dachreling anzuliegen, wenn die Dachreling an der Oberseite ihrer jeweiligen Durchbrechung einen in ihr Profil horizontal hineinführenden Wandbereich hat und die Spannklammer entsprechend in Spannstellung mit einem horizontal verlaufenden Spannsteg gegen diesen Wandbereich anliegt.

Die Spannklammer liegt gegen eine besonders große Fläche der Dachreling an, so dass sich eine großflächige Abstützung ergibt, wenn gemäß einer anderen Weiterbildung der Erfindung die Spannklammer im Anschluss an ihren in Spannstellung horizontal verlaufenden Spannsteg einen nach unten gerichteten, gegen die Kontur der Einschnürung anliegenden Stegbereich hat.

Üblicherweise führen bei Dachlastträgern die Spannklammern einen nach oben gerichteten Spannhub aus. Man kann sich jedoch auch der kinematischen Umkehr bedienen, indem der Dachlastträger zum Erzeugen von nach unten gerichteten Spannhüben ihrer Spannklammern ausgebildet ist und die Dachreling jeweils eine Abstützfläche hat, gegen die in Spannstellung die Spannklammer von oben her mit ihrer Spannkraft aufsitzt.

Bei einer solchen Ausführungsform kann sich die Spannklammer auch von oben her gegen eine obere Abstützfläche einer Durchbrechung abstützen, wenn die Spannklammer zum Eingreifen in die Dachreling zweimal abgebogen verläuft und zusätzlich zu ihrem horizontalen Spannsteg und sich daran anschließendem vertikalen Steg einen parallel zum Spannsteg ausgerichteten Stützsteg hat, der in Spannstellung von oben her auf dem Wandbereich der Dachreling aufsitzt.

Die Erfindung lässt verschiedene Ausführungsformen zu. Mehrere davon sind in der Zeichnung dargestellt und werden nachfolgend beschrieben. In ihr zeigen die
- Fig. 1: eine teilweise geschnitten dargestellte Vorderansicht einer Dachlastträger-Befestigung nach der Erfindung,
- Fig. 2 bis Fig. 7: Schnitte durch unterschiedliche Ausführungsformen von Dachlastträger-Befestigungen nach der Erfindung,
- Fig. 8: eine perspektivische Ansicht eines Teilbereiches einer Dachreling nach der Erfindung,
- Fig. 9: eine perspektivische Ansicht eines Teilbereiches einer zweiten Ausführungsform der Dachreling,
- Fig. 10: eine teilweise geschnitten dargestellte Vorderansicht einer weiteren Ausführungsform einer Dachlastträger-Befestigung nach der Erfindung.

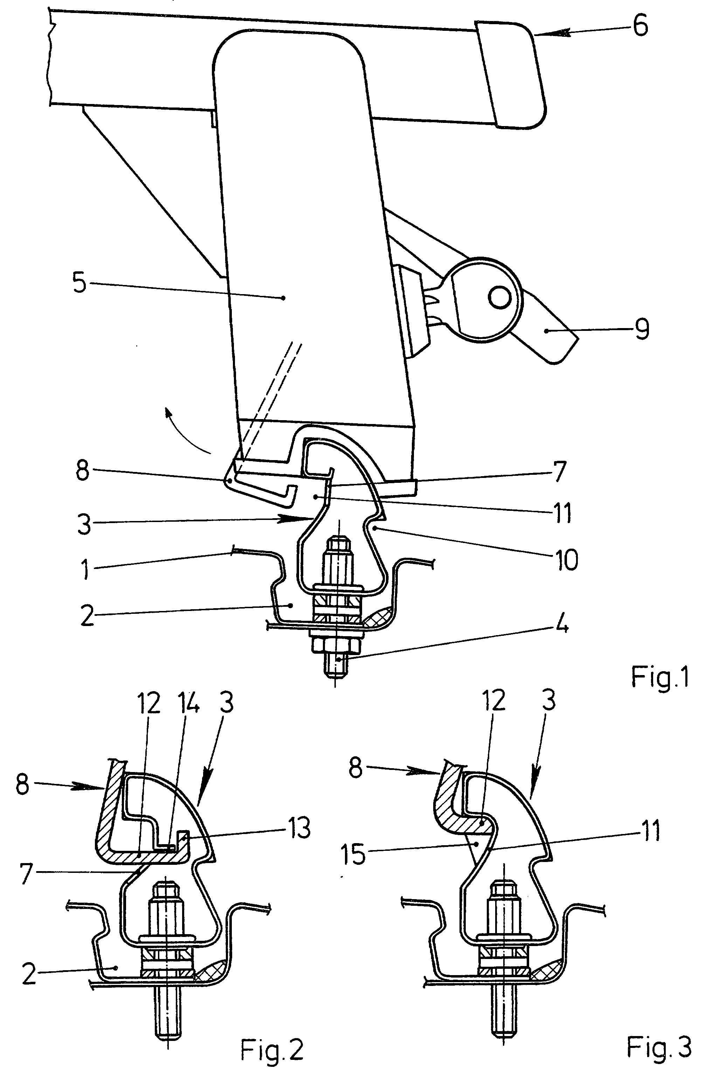

Die Figur 1 zeigt einen Teilbereich eines Daches 1 eines Kraftfahrzeuges mit einem Schweißkanal 2, welcher entlang jeder Längsseite des Kraftfahrzeugdaches 1 verläuft. In jedem der beiden Schweißkanäle 2 ist jeweils eine Dachreling 3 durch Schrauben 4 befestigt. Auf der Dachreling 3 stützt sich von oben her ein Stützfuß 5 eines Dachlastträgers 6 ab.

Die Dachreling 3 ist als Hohlprofil ausgebildet und hat im Bereich jeden Stützfußes 5 zumindest eine Durchbrechung 7 für eine Spannklammer 8 des Stützfußes 5. In der Figur 1 ist diese Spannklammer 8 im geöffneten Zustand dargestellt, in welchem man den Dachlastträger 6 von dem Dach 1 abheben kann. Schwenkt man einen Spannhebel 9 aus der in Figur 1 dargestellten Zwischenstellung weiter nach unten, dann gelangt die Spannklammer 8 durch die Durchbrechung 7 hindurch in die Dachreling 3 und spannt dadurch den Dachlastträger 6 an der Dachreling 3 fest.

Die Figur 1 lässt weiterhin erkennen, dass die als Hohlprofil ausgebildete Dachreling 3 an jeder Längsseite eine in Längsrichtung verlaufende Einschnürung 10, 11 hat. Die Durchbrechung 7 befindet sich innerhalb der auf der Innenseite liegenden Einschnürung 11.

Die Figur 2 zeigt, wie die Spannklammer 8 im Spannzustand in die Dachreling 3 eingreift. Hierzu hat sie einen sich in Spannstellung horizontal erstreckenden Spannsteg 12 und einen sich daran anschließenden, nach oben gerichteten Steg 13, der hinter einem Wandbereich 14 der Dachreling 3 greift, gegen den der Spannsteg 12 von unten her anliegt.

Bei der Ausführungsform nach Figur 3 ist die Einschnürung 11 nur geringfügig breiter als die Spannklammer 8 und wird nach vorn und hinten jeweils durch eine Rippe 15 begrenzt. Dadurch hat die Einschnürung die Form einer Eindrückung in die Dachreling 3. Die Spannklammer 8 hat bei dieser Ausführungsform lediglich den Spannsteg 12, mit der sie in die Einschnürung 11 greift. Ein Verrutschen des Dachlastträgers 6 nach vorn oder hinten bei ungenügender Spannkraft wird bei dieser Ausführungsform durch die Rippen 15 verhindert.

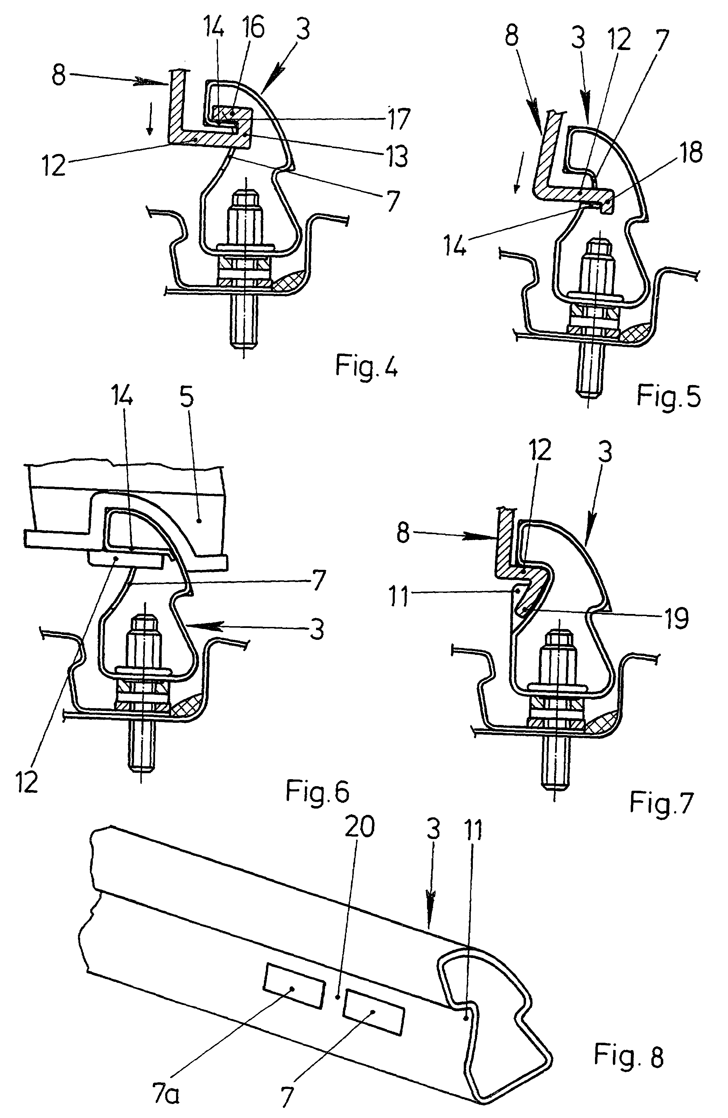

Bei der Ausführungsform nach Figur 4 ist die Spannklammer 8 so ausgebildet, dass sie einen nach unten gerichteten Spannhub auszuführen vermag. Sie ist insgesamt zweimal abgebogen und hat zusätzlich zu ihrem Spannsteg 12 und ihrem nach oben gerichteten Steg 13 einen sich horizontal erstreckenden Stützsteg 16, mit dem sie in Spannstellung von oben her auf einer Abstützfläche 17 des Wandbereiches 14 gespannt ist.

Bei der Ausführungsform nach Figur 5 ist am Spannsteg 12 eine nach unten gerichtete Abbiegung 18 vorgesehen. Der in die Dachreling 3 hineinführende Wandbereich 14 verläuft an der unteren Seite der Durchbrechung 7 und wird in Spannstellung von der Abbiegung 18 übergriffen. Die Spannkraft wird wie bei der Ausführungsform nach Figur 4 durch einen nach unten gerichteten Spannhub der Spannklammer 8 erzeugt.

Gemäß Figur 6 ragt der die Durchbrechung 7 begrenzende Wandbereich 14 bis zur gegenüberliegenden Wandseite der Dachreling 3 in diese hinein. Deshalb entsteht eine besonders große Anlagefläche für den Spannsteg 12, der dann entsprechend lang ausgebildet sein kann.

Die Ausführungsform nach Figur 7 unterscheidet sich von der nach Figur 3 dadurch, dass sich dem Spannsteg 12 ein nach unten gerichteter Stegbereich 19 anschließt, welcher in Spannstellung von außen her gegen die Dachreling 3 im Bereich der Einschnürung 11 anliegt und dadurch die Anlagefläche vergrößert.

Die perspektivische Darstellung gemäß Figur 8 zeigt die Ausführung der Dachreling 3 gemäß den Figuren 1, 2, 4, 5 und 6. Zu sehen ist, dass die Einschnürung 11 der Dachreling 3 nebeneinander zwei Durchbrechungen 7, 7a hat, die beide so bemessen sind, dass eine Spannklammer 8 in sie eingreifen kann. Der Wandbereich zwischen den beiden Durchbrechungen 7, 7a bildet eine vertikal verlaufende Rippe 20.

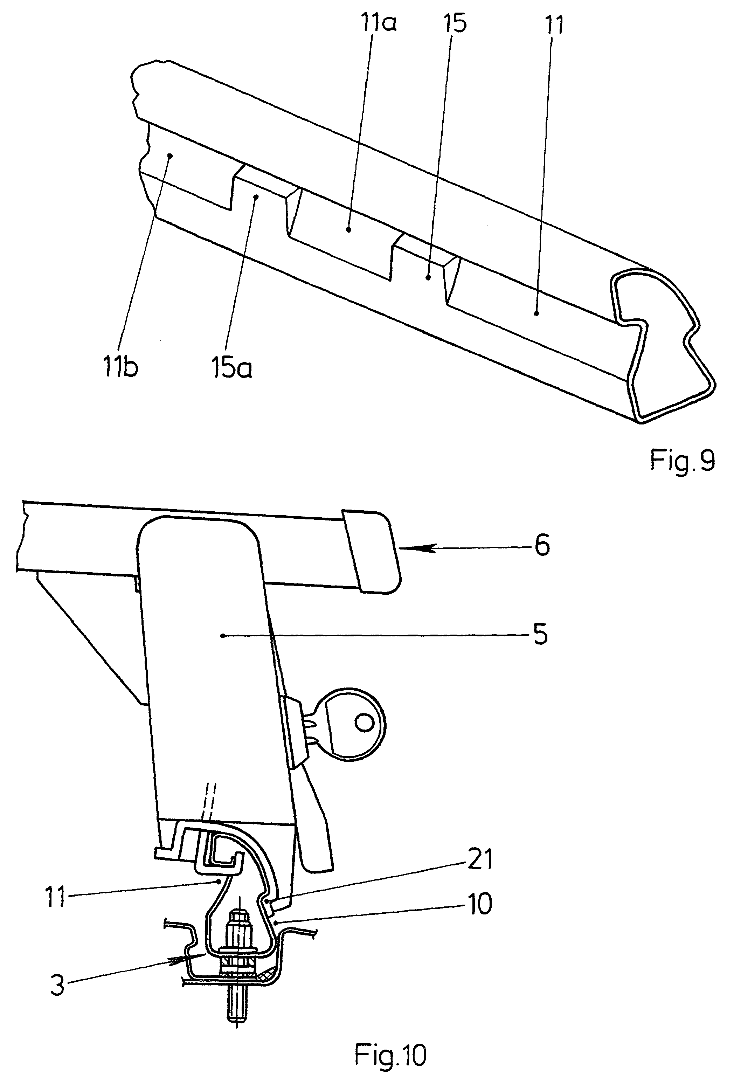

Die Figur 9 zeigt die Gestaltung der Dachreling 3 gemäß der Ausführungsform nach den Figuren 3 und 7. Zu sehen ist, dass die Einschnürung 11 nicht über die volle Länge der Dachreling 3 läuft, vielmehr sind durch vertikal verlaufende Rippen 15, 15a mehrere Einschnürungen 11, 11a, 11b hintereinander vorgesehen, die jeweils geringfügig länger als die einzelnen Spannklammern 8 breit sind.

Bei der Ausführungsform gemäß Figur 10 hat der Stützfuß 5 einen Spannvorsprung 21, der in die äußere Einschnürung 10 der Dachreling 3 greift. Dadurch kommt es an beiden Seiten der Dachreling 3 zu einem Formschluss zwischen dem Dachlastträger 6 und der Dachreling 3.

## Patentansprüche

1. Dachlastträger-Befestigung für ein Kraftfahrzeug, welche an jeder Längsseite seines Daches eine als Hohlprofil ausgeführte Dachreling hat, auf der ein Dachlastträger mit Stützfüßen aufsitzt und befestigt ist, wobei die Dachreling zum Eingreifen von jeweils einer Spannklammer eines Stützfußes an zumindest einer Längsseite eine ihren Querschnitt verengende Einschnürung aufweist, **dadurch gekennzeichnet, dass** die Einschnürung (10, 11) zur Begrenzung der horizontalen Verschiebbarkeit der Spannklammern (8) vertikal verlaufende, gegenüber der Einschnürung erhabene Rippen (15, 20) aufweist.

2. Dachlastträger-Befestigung nach Anspruch 1, **dadurch gekennzeichnet, dass** die Dachreling (3) jeweils in einem Schweißkanal (2) des Daches (1) befestigt ist und nach oben hin aus dem Schweißkanal (2) herausragt.

3. Dachlastträger-Befestigung nach den Ansprüchen 1 oder 2, **dadurch gekennzeichnet, dass** die Dachreling (3) den Querschnitt des Schweißkanals (2) zumindest weitgehend ausfüllt.

4. Dachlastträger-Befestigung nach zumindest einem der vorangehenden Ansprüche, **dadurch gekennzeichnet, dass** an jeder Längsseite eine Einschnürung (10, 11) vorgesehen ist und die Stützfüße (5) jeweils einen in diese Einschnürung (10, 11) greifenden Spannvorsprung (21) aufweisen.

5. Dachlastträger-Befestigung nach zumindest einem der vorangehenden Ansprüche, **dadurch gekennzeichnet, dass** die Spannklammer (8) jedes Stützfußes (5) jeweils fahrzeuginnenseitig zur jeweiligen Dachreling (3) vorgesehen sind.

6. Dachlastträger-Befestigung nach den Ansprüchen 3 oder 4, **dadurch gekennzeichnet, dass** zum Eingreifen durch die Spannklammer (8) an einer Seite der jeweiligen Dachreling (3) für jede Spannklammer (8) zumindest eine Einschnürung (11) vorgesehen ist, welche in etwa die Breite der Spannklammer (8) hat, und dass die vertikal verlaufenden Rippen (15) durch den Wandbereich zwischen zwei Einschnürungen (11) gebildet sind.

7. Dachlastträger-Befestigung nach zumindest einem der vorangehenden Ansprüche, **dadurch gekennzeichnet, dass** die Spannklammer (8) in Spannstellung einen horizontal verlaufenden Spannsteg (12) aufweist, der gegen die Kontur der Einschnürung (11) anliegt.

8. Dachlastträger-Befestigung nach zumindest einem der vorangehenden Ansprüche, **dadurch gekennzeichnet, dass** die Spannklammer (8) im Anschluss an ihren in Spannstellung horizontal verlaufenden Spannsteg (12) einen nach unten gerichteten, gegen die Kontur der Einschnürung (11) anliegenden Stegbereich (19) hat.

9. Aus einem Hohlprofil bestehende Dachreling eines Kraftfahrzeugs für die Befestigung eines Dachlastträgers, der mit Stützfüßen auf der Dachreling aufsitzt, wobei die Dachreling zum Eingreifen von jeweils einer Spannklammer eines Stützfußes an zumindest einer Längsseite eine ihren Querschnitt verengende Einschnürung aufweist, **dadurch gekennzeichnet, dass** die Einschnürung (10, 11) zur Begrenzung der horizontalen Verschiebbarkeit der Spannklammern (8) vertikal verlaufende, gegenüber der Einschnürung erhabene Rippen (15, 20) aufweist.

10. Dachreling nach Anspruch 9, **dadurch gekennzeichnet, dass** zum Eingreifen durch die Spannklammer (8) an einer Seite der jeweiligen Dachreling (3) für jede Spannklammer (8) zumindest eine Einschnürung (11) vorgesehen ist, welche in etwa die Breite der Spannklammer (8) hat, und dass die vertikal verlaufenden Rippen (15) durch den Wandbereich zwischen zwei Einschnürungen (11) gebildet sind.

11. Fahrzeugdach mit einer Dachreling nach einem der Ansprüche 9 oder 10.

## Claims

1. Roof rack fastening for a motor vehicle, which on each longitudinal side of its roof has a roof rail constructed as a hollow profile on which a roof rack is seated with supporting feet and fastened, wherein the roof rail has a constriction narrowing its cross-section on at least one longitudinal side for the engagement of one clamping clip of a supporting foot, **characterised in that** the constriction (10, 11) has vertically extending ribs (15, 20) which are raised in relation to the constriction, for limiting the horizontal displacement capacity of the clamping clips (8).

2. Roof rack fastening according to claim 1, **characterised in that** the roof rail (3) is fastened in each case in a weld channel (2) of the roof (1) and extends upwardly out of the weld channel (2).

3. Roof rack fastening according to claim 1 or 2, **characterised in that** the roof rail (3) at least to a large extent fills the cross-section of the weld channel (2).

4. Roof rack fastening according to one or more of the preceding claims, **characterised in that** on each longitudinal side a constriction (10, 11) is provided, and the supporting feet (5) each have a clamping projection (21) engaging in this constriction (10, 11).

5. Roof rack fastening according to one or more of the preceding claims, **characterised in that** the clamping clip (8) of each supporting foot (5) is provided in each case on the inside of the vehicle relative to the respective roof rail (3).

6. Roof rack fastening according to claim 3 or 4, **characterised in that**, for engagement by the clamping clip (8), on one side of the respective roof rail (3) for each clamping clip (8) is provided at least one constriction (11) which has approximately the width of the clamping clip (8), and **in that** the vertically extending ribs (15) are formed by the wall region between two constrictions (11).

7. Roof rack fastening according to one or more of the preceding claims, **characterised in that** the clamping clip (8) in the clamping position has a horizontally extending clamping web (12) which abuts against the contour of the constriction (11).

8. Roof rack fastening according to one or more of the preceding claims, **characterised in that** the clamping clip (8) has, adjoining its clamping web (12) which extends horizontally in the clamping position, a downwardly directed web region (19) abutting against the contour of the constriction (11).

9. Roof rail of a motor vehicle consisting of a hollow profile for fastening a roof rack which is seated with supporting feet on the roof rail, wherein the roof rail has a constriction narrowing its cross-section on at least one longitudinal side for the engagement of one clamping clip of a supporting foot, **characterised in that** the constriction (10, 11) has vertically extending ribs (15, 20) which are raised in relation to the constriction, for limiting the horizontal displacement capacity of the clamping clips (8).

10. Roof rail according to claim 9, **characterised in that**, for engagement by the clamping clip (8), on one side of the respective roof rail (3) for each clamping clip (8) is provided at least one constriction (11) which has approximately the width of the clamping clip (8), and **in that** the vertically extending ribs (15) are formed by the wall region between two constrictions (11).

11. Vehicle roof with a roof rail according to either of claims 9 or 10.

## Revendications

1. Moyen de fixation d'une galerie de toit pour un véhicule automobile lequel moyen présentant une barre de toit conçue comme un profilé creux sur chaque côté longitudinal du toit, barre sur laquelle repose et est fixée une galerie de toit avec des pieds d'appui, la barre de toit comprenant, en vue de la mise en prise de respectivement une bride de serrage d'un pied d'appui sur au moins un côté longitudinal, un rétrécissement resserrant sa section transversale, **caractérisé en ce que** le rétrécissement (10, 11) comprend des nervures (15, 20) en relief par rapport au rétrécissement, s'étendant verticalement, destinées à limiter la mobilité horizontale des brides de serrage (8).

2. Moyen de fixation d'une galerie de toit selon la revendication 1, **caractérisé en ce que** la barre de toit (3) est fixée respectivement dans un canal de soudage (2) du toit (1) et dépasse du canal de soudage (2) vers le haut.

3. Moyen de fixation d'une galerie de toit selon la revendication 1 ou 2, **caractérisé en ce que** la barre de toit (3) remplit au moins dans une large mesure la section transversale du canal de soudage (2).

4. Moyen de fixation d'une galerie de toit selon au moins une des revendications précédentes, **caractérisé en ce qu'**un rétrécissement (10, 11) est prévu sur chaque côté longitudinal et les pieds d'appui (5) comprennent respectivement une saillie de serrage (21) se mettant en prise dans ce rétrécissement (10, 11).

5. Moyen de fixation d'une galerie de toit selon au moins une des revendications précédentes, **caractérisé en ce que** les brides de serrage (8) de chaque pied d'appui (5) sont prévues respectivement côté intérieur du véhicule par rapport à leur barre de toit (3) respective.

6. Moyen de fixation d'une galerie de toit selon la revendication 3 ou 4, **caractérisé en ce qu'**il est prévu au moins un rétrécissement (11) pour chaque bride de serrage (8) en vue de la mise en prise par la bride de serrage (8) sur un côté de sa barre de toit (3) respective, lequel rétrécissement présente approximativement la largeur de la bride de serrage (8), et **en ce que** les nervures (15) s'étendant verticalement sont formées par la zone de paroi entre deux rétrécissements (11).

7. Moyen de fixation d'une galerie de toit selon au moins une des revendications précédentes, **caractérisé en ce que** la bride de serrage (8) comprend en position serrée un étai de serrage (12) s'étendant horizontalement, qui se situe contre le contour du rétrécissement (11).

8. Moyen de fixation d'une galerie de toit selon au moins une des revendications précédentes, **caractérisé en ce que** la bride de serrage (8) présente une zone d'étai (19) orientée vers le bas, située contre le contour du rétrécissement (11) et raccordée à l'étai de serrage (12) qui s'étend horizontalement en position serrée.

9. Barre de toit d'un véhicule automobile constituée d'un profilé creux, pour la fixation d'une galerie de toit, qui repose avec des pieds d'appui sur la barre de toit, la barre de toit comprenant, en vue de la mise en prise de respectivement une bride de serrage d'un pied d'appui sur au moins un côté longitudinal, un rétrécissement resserrant sa section transversale, **caractérisée en ce que** le rétrécissement (10, 11) comprend des nervures (15, 20) en relief par rapport au rétrécissement, s'étendant verticalement pour limiter la mobilité horizontale des brides de serrage (8).

10. Barre de toit selon la revendication 9, **caractérisée en ce qu'**en vue de la mise en prise par les brides de serrage (8) sur un côté de leur barre de toit (3) respective pour chaque bride de serrage (8) il est prévu au moins un rétrécissement (11), lequel présente approximativement la largeur des brides de serrage (8), et **en ce que** les nervures (15) s'étendant verticalement sont formées par la zone de paroi entre deux rétrécissements (11).

11. Toit de véhicule comprenant une barre de toit selon la revendication 9 ou 10.
